# EUROPEAN PATENT SPECIFICATION

(11) **EP 0 965 074 B1**
(45) Date of publication and mention of the grant of the patent: **23.01.2002**
(21) Application number: 98908306.8
(22) Date of filing: 23.02.1998
(51) Int. Cl.: G05D 7/01, E02B 7/18

(54) **DEVICE FOR CONTROLLING A LIQUID FLOW**
EINRICHTUNG ZUM REGELN EINER FLÜSSIGKEITSSTRÖMUNG
DISPOSITIF DE REGULATION DE L'ECOULEMENT D'UN LIQUIDE

(30) Priority: 25.02.1997 NL 1005369
(43) Date of publication of application: 22.12.1999
(60) Divisional application: 01202384.2
(73) Proprietor: Bouwkamp, Gertjan, Roelof, 5671 XJ Nuenen (NL)
(72) Inventor: Bouwkamp, Gertjan, Roelof, 5671 XJ Nuenen (NL)
(74) Representative: Valkonet, Rutger
(86) International application number: NL9800106
(87) International publication number: WO9837469

(56) References cited:
- DE-B- 1 296 845
- DE-C- 973 002
- FR-A- 645 285
- FR-A- 1 367 596
- FR-A- 1 406 918
- GB-A- 827 001

## Description

The invention relates to a device for controlling a liquid flow passing through the device, which device forms a system of communicating vessels comprising a pressure chamber with a flow treshold, an outer vessel and an inner vessel placed upstream from the pressure chamber and an inner vessel and an outer vessel placed downstream from the pressure chamber, whereby during operation the liquid flow can be controlled by means of the pressure of a gas present in the pressure chamber.

Such device is known from the German patent publication DE-C-973 002. In this device the pressure chamber has a connection with the atmosphere, that is dependent on the liquid level in the upstream inner vessel such that the connection is open when said liquid level is below a predetermined level and vice versa, thus keeping the flow speed constant.

The drawback of this device is that there is allways a flow passing through the device, but is not possible to cut off or block the flow dependent on the liquid level.

The device according to the invention is characterized in that the pressure chamber has a connection with the atmosphere which connection is open when the liquid level in either the downstream or the upstream outer vessel lies below a predetermined level and that the connection is closed when the said liquid level lies above the said predetermined level.

Hardly any moving part is required, if at all, because a gas pressure is used for controlling the liquid flow, as a result of which the device requires little maintenance and is not very liable to malfunction.

The invention is based on the insight that a gas is capable of displacing a liquid. The through-flow can be increased, reduced or stopped by locally introducing or discharging a gas into or from a predetermined part-of a liquid pipe.

One embodiment of the device according to the invention comprises a bent pipe portion. Said pipe portion is preferably disposed in the device in such a manner that the bend in said pipe portion is positioned higher than the rest. Thus there is a higher portion, in which a gas may be present. Gas is lighter than liquid, and will thus rise in liquid. An atmospheric pressure, an underpressure or an overpressure may prevail in said bend. The ends of the pipe portion may be disposed in different reservoirs, for example, enabling to control a liquid flow between said reservoirs.

Another embodiment of the device according to the invention has a pipe portion which comprises more than one bend, so that it forms a system of communicating vessels. This makes it possible to control the liquid with extra precision. This device may be suitably incorporated in a system of pipes. The length of the various parts of the system of communicating vessels may be adapted to the dimension and the vertical position of the pipes of the system in which the device is incorporated, as a result of which the desired shutting-off action and flow control can take place with extra precision. This embodiment of the device according to the invention can be realised in several manners. Most of said manners will result in a device which is not dependent on energy being supplied.

Another embodiment of the device according to the invention comprises a bent pipe portion, which comprises a wall in which an opening is present, through which opening a gas can be introduced or carried off. This provision enables an even better control of the liquid flow. The gas pressure that is applied can be adapted to the dimensions and the location of the pipes of the system in which the device is incorporated.

The gas pressure is preferably delivered by means of a gas pressure delivery system which is controlled by means of a liquid flow. In that case the system will comprise few moving parts, as a result of which the system requires little maintenance and is not very liable to malfunction and is practically independent of the supply of energy.

According to another embodiment of the device according to the invention the gas pressure is delivered by a compressor. The advantage of this is that thus practically any gas pressure that is desired can be delivered in a simple manner.

The device according to the invention can be used advantageously for controlling liquid flows in a sewage system. With this type of system there is a great risk of dirt being deposited, since the system is used for carrying off dirt. Moreover, a sewage system is very difficult to gain access to, because it is located deep under the ground surface. The device according to the invention exhibits hardly any fouling, since there is hardly any deposition of dirt, and furthermore it requires almost no maintenance. This makes the device according to the invention highly suitable for this use. The device may for example be used for protecting against backflow in a sewage system in a cellar, for limiting the flow in sewage chains, and for separating rain water into highly polluted rain water and less polluted rain water. Said rain water may be discharged separately to a foul sewer and a clean sewer respectively.

The invention will be explained and elucidated hereafter with reference to the following Figures.

Similar parts are numbered alike in the various Figures.

Figure 1 is a diagrammatic longitudinal section of a device by means of which a liquid flow through a system of pipes can be controlled, wherein various stages of a control process are shown.

Figure 2 is a diagrammatic longitudinal section of an embodiment of the device according to the invention, which functions as a valve.

Figure 3 is a diagrammatic longitudinal section of an embodiment of the device according to the invention, which functions as a controller.

Figure 4 is a diagrammatic longitudinal section of an embodiment of the device according to the invention, which functions as a flow controller.

Figure 5 is a diagrammatic longitudinal section of an embodiment of the device according to the invention, which functions as a flow controller.

Figure 6 is a diagrammatic cross-section of an embodiment of the device according to the invention, which is incorporated between a sewage drain and a buffer settling basin, wherein various stages of a control process are shown.

Figure 7 is a diagrammatic cross-section of an embodiment of the device according to the invention as shown in Figure 4, which is installed in a sewage drain.

Figure 8 is a diagrammatic cross-section of an embodiment of the device according to the invention as shown in Figure 5, which is installed in a sewage drain.

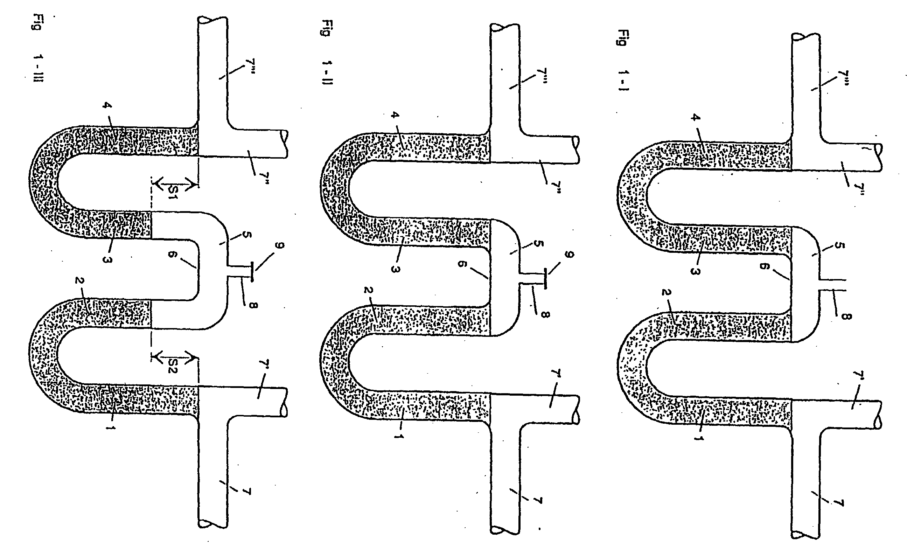

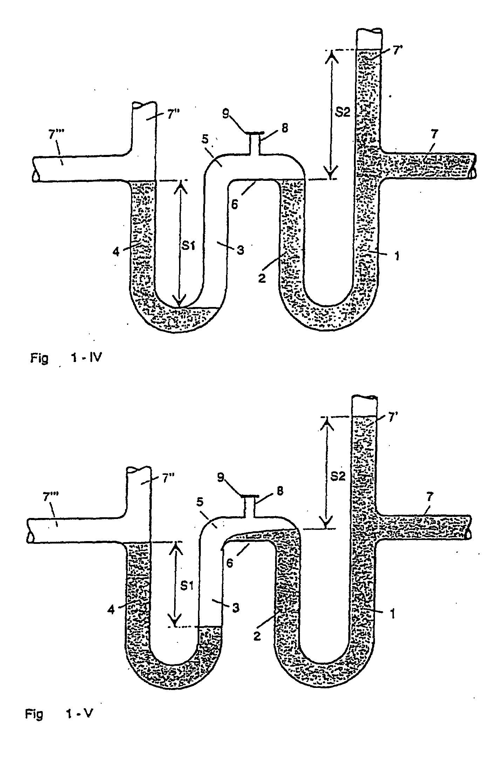

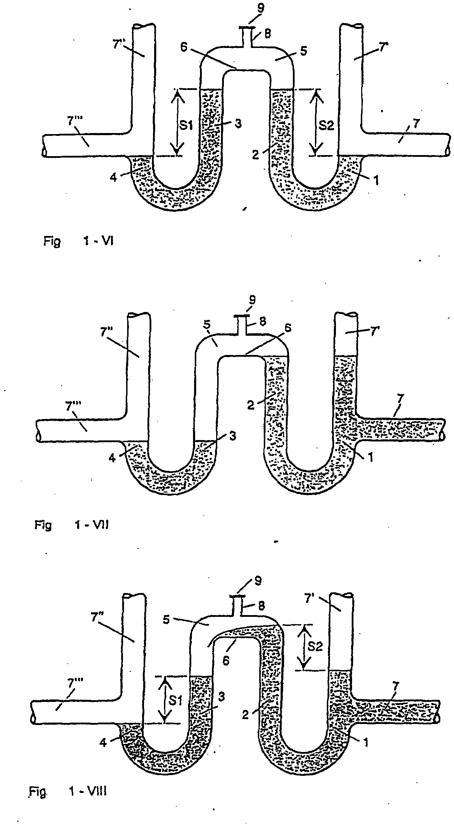

Figure 1 is a diagrammatic longitudinal section of an embodiment of a device by means of which a liquid flow through a system of pipes can be controlled, wherein eight different stages of a control process are shown. In this case the device forms a system of communicating vessels. Figures I, II, III, IV, V, VII, VIII show different situations wherein a liquid is present in the device.

The device comprises an outer pressure vessel (1), an inner pressure vessel (2), an inner back pressure vessel (3), an outer back pressure vessel (4), and a pressure chamber (5). In this embodiment said pressure vessels (1, 2, 3 and 4) have the same dimensions and shape. They may also have different dimensions, depending on their use. The shape of the pressure chamber (5) may differ from that which is shown. A flow threshold (6) is present in the pressure chamber, and in this embodiment the wall of the pressure chamber has a closable opening (8) provided therein, through which a gas can be supplied or discharged, or which can be closed, so that the pressure chamber (5) will be shut off from the atmosphere. This embodiment of the device comprises inlets (7, 7', 7", 7"') which are in communication with the atmosphere in this figure. It is also possible for an inlet not to be in communication with the atmosphere. In that case the liquid levels will not be as shown in this figure. It depends on the particular use which type of connection is used. A liquid can flow into or out of the device through the inlets. A valve (9) may be present for shutting off the pressure chamber from the atmosphere.

The pressure chamber (5) may be in communication with the atmosphere, or it may be shut off therefrom. If the pressure chamber is not in communication with the atmosphere, the pressure in the pressure chamber may differ from the atmospheric pressure. The liquid level and/or the liquid flow may differ as the pressure in the pressure chamber differs.

In Subfigure I the pressure chamber is shown to be in communication with the atmosphere, and the liquid levels in the outer pressure vessel (1), the inner pressure vessel (2), the inner back pressure vessel (3) and the outer back pressure vessel (4) are the same. In Subfigures II - VIII the pressure chamber is shown to be shut off from the atmosphere. In Subfigure II the pressure in the pressure vessel is the same as the atmospheric pressure. In Subfigure VI the pressure in the pressure vessel is lower than the atmospheric pressure. As a result of the presence of the underpressure in the pressure vessel, the liquid level in the inner pressure vessel and the inner back pressure vessel is higher than in the outer pressure vessel and the outer back pressure vessel. The underpressure is still not high enough for effecting a liquid flow or causing liquid to flow over the liquid threshold. In Subfigure III the pressure in the pressure vessel is higher than the atmospheric pressure. As is shown in said figure, no liquid is present in the pressure chamber. The liquid does not flow through in this situation. The difference in level (S2) between the liquid in the outer pressure vessel (1) and that in the inner pressure vessel (2) is the same as the difference in level(S1) between the liquid in the inner back pressure vessel (3) and that in the outer back pressure vessel (4). This difference in level depends on the difference between the pressure in the pressure chamber and the atmospheric pressure. In Subfigure IV the device is shown to be in liquid contact with the inlet (7). The difference in level (S2) between the liquid in the outer pressure vessel (1) and that in the inner pressure vessel (2) is the same as the difference in level(S1) between the liquid in the inner back pressure vessel (3) and that in the outer back pressure vessel (4). In the inner pressure vessel the liquid is on a level with the flow threshold. The pressure in the pressure chamber (an overpressure in this case) is so much higher than the atmospheric pressure, that the liquid does not flow through. A through-flow can be enabled by adjusting a lower overpressure in the pressure chamber. This situation is shown in Subfigure V. The through-flow can be controlled by means of the pressure in the pressure chamber, therefore. It is also possible to measure the level of the liquid in the pressure chamber and to adjust the pressure on the basis of said measurement. In this manner it is possible to control the flow rate, that is, the amount of liquid that flows over the threshold per time unit. Figures VI, VII and VII show the situation in which at least two inlets are located at a level lower than the pressure chamber (5). Figure VI shows the situation in which an underpressure prevails in the pressure chamber, and no liquid is being introduced into the inlets (7, 7"'). From the fact that S1 and S2 are of the same magnitude it appears that the system is in a state of equilibrium. Figure VII shows the situation in which the level of the liquid in one of the inlets (7) is higher than in the other inlet (7"'). Figure VIII shows the situation in which the gas pressure in the gas chamber (5) is so high that liquid can just flow over the liquid threshold.

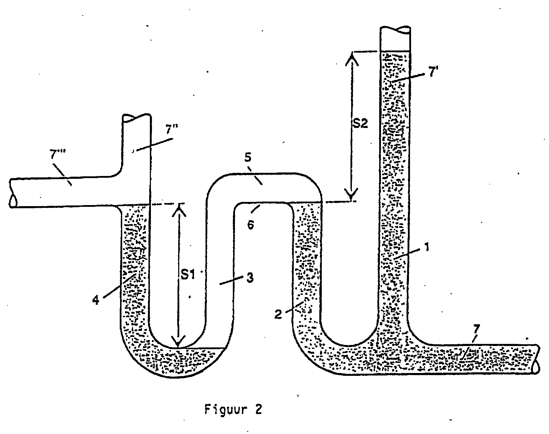

Figure 2 is a diagrammatic longitudinal section of an embodiment of the device according to the invention, which functions as a valve. The device comprises an outer pressure vessel (1), an inner pressure vessel (2), an inner back pressure vessel (3), an outer back pressure vessel (4), and a pressure chamber (5). The pressure chamber (5) comprises a flow threshold (6). The device comprises inlets (7, 7', 7", 7"'). Liquid can flow into or out of the device via said inlets. Usually the liquid flows from the side of inlets 7" and 7"' in the direction of inlets 7 and 7'. In that case the pressure chamber will be in open communication with the atmosphere via the inner pressure vessel (2) and the outer pressure vessel (1). If the liquid level in the outer pressure vessel (1) rises, the liquid level in the inner pressure vessel (2) will rise as well. As a result of this rise, the gas present in the inner pressure vessel (2) will be carried to the pressure chamber. This will cause the pressure in the pressure chamber (5) to rise, so that liquid level in the outer pressure vessel (1) may be higher than the level of the flow threshold (6). Consequently there will be no through-flow. This situation is shown in Figure 2. By enlarging the through-flow opening of the inner pressure vessel (2) and reducing the height, the difference in level between inlets 7"' and 7 can be reduced considerably, whilst the operation will remain exactly the same.

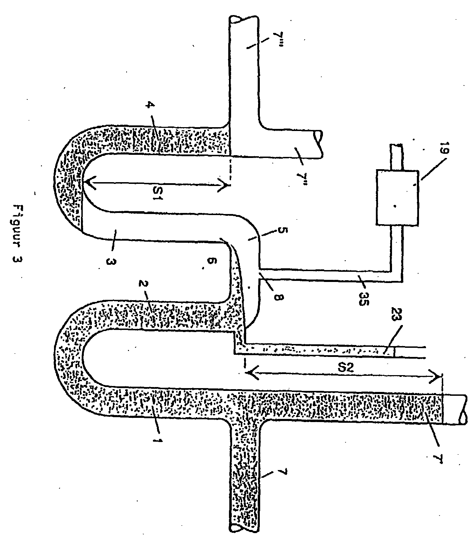

Figure 3 is a diagrammatic longitudinal section of an embodiment of the device according to the invention, which functions as a controller. The device comprises an outer pressure vessel (1), an inner pressure vessel (2), an inner back pressure vessel (3), an outer back pressure vessel (4), and a pressure chamber (5). The pressure chamber (5) comprises a flow threshold (6) and an opening (8), which opening is connected to a pipe (35), which is in communication with a compressor plant (19). The device comprises inlets (7, 7', 7", 7"') and a breather tube (23). Liquid can flow into or out of the device via said inlets. Gas may be supplied by means of a venturi tube in the inlet (7). The advantage of this is that no energized control system is required. The gas may also be supplied by means of a compressor (19), however. Said compressor can be readily used, without any control installations being required. The water falls down in the inner back pressure vessel (3). Excess gas is discharged via a breather tube (23). In this figure S1 is smaller than S2. After all, there is no state of equilibrium. Liquid flows over the flow threshold (6). The breather tube (23) will only exhaust air if the liquid level in the pressure chamber (5) falls to a level below the bottom side of the breather tube (23). If gas is discharged from the pressure chamber (5), the pressure in the pressure chamber will decrease, and, as a result of this, the liquid level in the pressure chamber (5) will rise again. As a result of this, the pressure chamber will no longer be in open communication with the atmosphere, and the pressure in the pressure chamber will increase. This will lead to a state of equilibrium, wherein the liquid level in the pressure chamber will remain at a constant level, independently of the liquid level in the outer pressure vessel (7'). Since this level determines the liquid flow, also the liquid flow will remain constant, therefore. The liquid flow can thus be varied by varying the level of the bottom side of the breather tube (23).

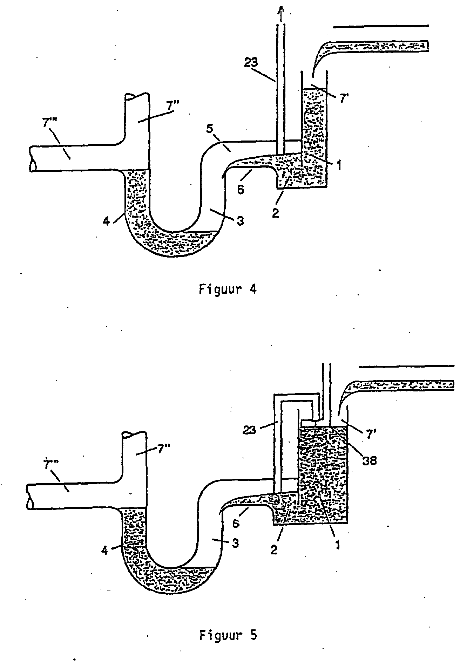

Figure 4 is a diagrammatic longitudinal section of an embodiment of the device according to the invention, which functions as a flow controller. The device comprises an outer pressure vessel (1), an inner pressure vessel (2), an inner back pressure vessel (3), an outer back pressure vessel (4), and a pressure chamber (5). The pressure chamber (5) comprises a flow threshold (6). The device comprises inlets (7', 7", 7"') and a breather tuber (23). Liquid can flow into or out of the system via said inlets. Gas is supplied into the pressure chamber by the liquid flow. The liquid is poured into the outer pressure vessel (1) from a height. The resulting turbulence will introduce air bubbles into the liquid, which air bubbles are carried to the pressure chamber (5) with the flow. The breather tube (23) ensures that the liquid level above the flow threshold will be constant. If the level of the liquid above the bottom side of the breather tube (23) rises, said tube will be shut off. The excess gas cannot escape in that case, as a result of which the pressure in the pressure chamber (5) will rise. This pressure increase will cause the liquid level in the pressure chamber to fall, until it has fallen to a level below the bottom side of the breather tube. In that situation the breather tube will no longer be shut off, as a result of which gas will escape from the pressure chamber (5), the pressure will decrease and the liquid level will rise again. Thus the liquid level in the pressure chamber will remain substantially the same as the level of the bottom side of the breather tube (23). Also the flow will remain constant in this manner. The flow can be varied by varying the position of the bottom side of the breather tube (23).

Figure 5 is a diagrammatic longitudinal section of an embodiment of the device according to the invention, which functions as a flow controller. The device functions in substantially the same manner as the device shown in Figure 4. This embodiment comprises a valve (38), which valve is capable of shutting off the breather tube (23). When the liquid level in the outer pressure vessel (1) is so high that the breather tube (23) is shut off from the atmosphere, the pressure chamber (5) will also be shut off from the atmosphere. In that case the air being introduced into the pressure chamber (5) cannot escape via the breather tube (23) anymore. The pressure in the pressure chamber (5) will gradually rise. Eventually it will be so high that no liquid will flow over the liquid threshold (6) anymore.

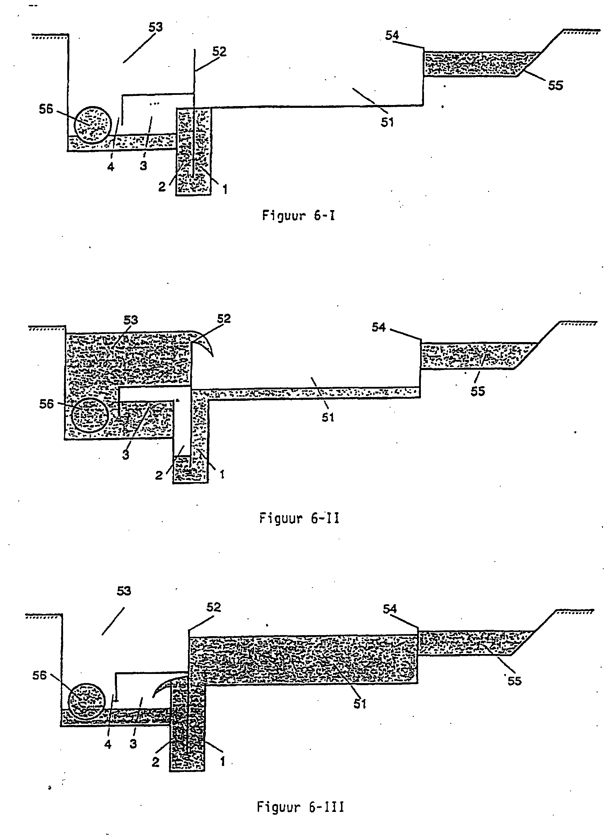

Figure 6 is a diagrammatic cross-section of an embodiment of the device according to the invention, which is incorporated between a sewage drain (53) and a buffer settling basin (51), wherein various stages of a control process are shown. The device comprises an outer pressure vessel (1), an inner pressure vessel (2), an inner back pressure vessel (3), and an outer back pressure vessel (4). A first overflow edge (52) is present between the sewage drain (53) and the buffer settling basin (51), and a second overflow edge (54) is present between the buffer settling basin and the ground water (55). Furthermore a supply sewer (55) may be present. The sewage water may also flow directly from a surface, such as a street, into the sewage drain (53). In this figure the through-flow area of the inner back pressure vessel (3) is larger than that of the inner pressure vessel. This enables a deep position of the bottom of the buffer settling basin, thus providing a larger capacity. The operation of part of this system is the same as in Figure 2. The function of a buffer settling basin is to buffer sewage water and possibly allow solids which are present in the sewage water to settle, if there is so much precipitation that the capacity of the sewage system is insufficient. It is desirable that the buffer settling basin (51) is not filled with sewage water that is discharged in dry weather conditions, because it will quickly foul up in those circumstances. If there has been an excessive amount of precipitation, the sewage water will run over the second overflow edge (54) into the surface water (55). Subfigure I shows the situation in dry weather conditions. The amount of sewage water will be small in those circumstances. No sewage water will flow into the buffer settling basin. Subfigure II shows the situation when there has been a great deal of precipitation. The sewage water flows over the first overflow edge (52) and fills the buffer settling basin. In that case there will be no through-flow through the inner pressure vessels (2, 3). Subfigure III shows the situation in which the buffer settling basin contains sewage water and the sewage water level in the sewage drain is low. Now sewage water runs from the buffer settling basin into the sewage drain (53) via the inner pressure vessels (2, 3).

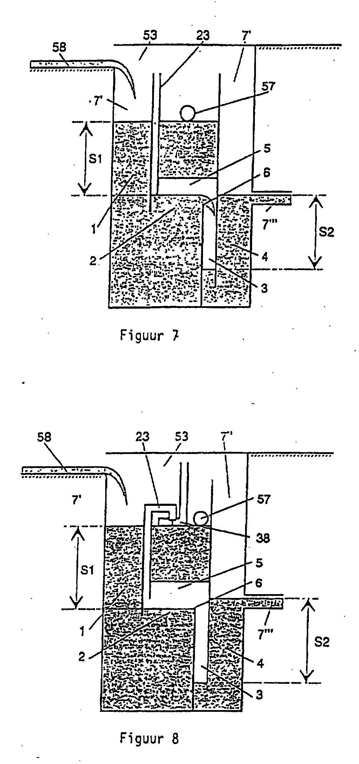

Figure 7 is a diagrammatic cross-section of an embodiment of the device according to the invention as shown in Figure 4, which is installed in a sewage drain (53). The parts used are the same as in Figure 4, with the addition of a discharge sewer (57). The device functions to limit the flow through inlet 7"' to a predetermined value. If the supply of sewage water is larger than this flow, the sewage water level in the drain (53) will rise. Once said level has exceeded a predetermined value, the sewage water will be discharged through the discharge sewer. The first rain water that falls is much more polluted than the rain that falls later. The illustrated device makes it possible to separate these two types of water. The first rain water that falls, which is polluted, is discharged via inlet 7"', which is connected to a water purification plant. The cleaner rain water that falls later can be led elsewhere via the discharge sewer (57). It may be filtrated into the ground, for example.

Figure 8 is a diagrammatic cross-section of an embodiment of the device according to the invention as shown in Figure 5, which is installed in a sewage drain (53). The parts used are the same as in Figure 5, with the addition of a discharge sewer (57) and a surface (58), such as a street. 5 The operation of the device will be the same as that of the device shown in Figure 7 as long as the liquid level in the sewage drain (53) remains below a predetermined value. When the liquid level in the sewage drain (53) exceeds that value, the valve (38) will shut off the breather tube (23). The pressure chamber (5) will no longer be in communication with the atmosphere in that case, and the discharge via inlet 7"' will be stopped.

## Claims

1. A device for controlling a liquid flow passing through the device, which device forms a system of communicating vessels comprising a pressure chamber (5) with a flow treshold (6), an outer vessel (1) and an inner vessel (2) placed upstream from the pressure chamber and an inner vessel (3) and an outer vessel (4) placed downstream from the pressure chamber, whereby during operation the liquid flow ) can be controlled by means of the pressure of a gas present in the pressure chamber (5), **characterized in that** the pressure chamber has a connection (8) with the atmosphere which connection is open when the liquid level in either the ,downstream (4) or the upstream (1) outer vessel lies below a predetermined level and that the connection is closed (9) when the said liquid level lies above the said predetermined level.

2. A device according to claim 1, **characterized in that** the said predetermined level in the upstream outer vessel lies at an equal or higher level than the threshold.

3. A device according to claim 2, **characterized in that** the contacting surface of the liquid in the inner upstream vessel and the gas in the pressure chamber is greater than the contacting surface of the liquid in the inner downstream vessel and the gas in the pressure chamber.

4. A device according to claim 1, **characterized in that** the said predetermined level in the downstream outer vessel lies at a lower level than that of the threshold.

5. A device according to claim 4, **characterized in that** the contacting surface of the liquid in the inner downstream vessel (3) and the gas in the pressure chamber (5) is greater than the contacting surface of the liquid in the inner upstream vessel (2) and the gas in the pressure chamber (5).

6. A device according to claim 1,2 or 3, **characterized in that** gas is transported into the pressure chamber (5) due to the liquid flow entering the device and that means are present, which permit the discharge of gas from the pressure chamber (5) via at least one connection.

7. A device according to claim 6, **characterized in that** the means comprise a tube (23), which tube terminates in the pressure chamber (5) and which is in communication with the atmosphere.

8. A device according to claim 7, **characterized in that** the tube (23) ends at a pre-determined height above the flow threshold (6) of the pressure chamber (5).

9. A device according to claim 7 or 8, **characterized in that** the tube (23) ends in a wall of the inner upstream vessel (2).

10. A device according to claim 7, 8 or 9, **characterized in that** the tube (23) ends at a pre-determined height in the outer upstream vessel (1) and can be closed or opened by means of a float (38) depending on the level or liquid **in that** vessel (1).

11. A device according to claim 6, **characterized in that** the means are formed by means of a wall, which separates the inner upstream vessel (2) from the outer upstream vessel (1) and which wall ends at a pre-determined height above the flow treshold (6) of the pressure chamber.

12. A device according to claim 1 or 2, **characterized in that** the gas is transported into the pressure chamber (5) via a compressor and that means are present, which permit the discharge of gas from the pressure chamber via at least one connection.

13. A device according to claim 12, **characterized in that** the means comprise a tube, which terminates in the pressure chamber and which is in communication with the atmosphere.

14. A device according to claim 13, **characterized in that** the tube ends at a pre-determined height above the flow treshold of the pressure chamber.

15. A device according to claim 13 or 14, **characterized in that** the tube ends in a wall of the inner upstream vessel.

16. A device according to claim 13, 14 or 15, **characterized in that** the tube ends at a pre-determined height in the outer upstream vessel and can be closed or opened by means of a float depending on the level of liquid **in that** vessel.

17. A device according to claim 12, **characterized in that** the means are formed by means of a wall , which separates the inner upstream vessel from the outer upstream vessel and which wall ends at a pre-determined height above the flow treshold of the pressure chamber.

## Patentansprüche

1. Vorrichtung zur Regelung eines Flüssigkeitsflusses, der durch die Vorrichtung fließt, wobei die Vorrichtung ein System von kommunizierenden Behältern bildet, die eine Druckkammer (5) mit einer Flussschwelle (6), einen äußeren Behälter (1) und einen inneren Behälter (2), die von der Druckkammer aus stromaufwärts platziert sind, und einen inneren Behälter (3) und einen äußeren Behälter (4), die von der Druckkammer aus stromabwärts platziert sind, umfassen, wobei der Flüssigkeitsfluss während des Betriebs durch Mittel zum Druck eines Gases geregelt werden kann, das sich in der Druckkammer befindet, **dadurch gekennzeichnet, dass** die Druckkammer eine Verbindung (8) mit der Atmosphäre aufweist, wobei die Verbindung offen ist, wenn sich das Flüssigkeitsniveau entweder in dem stromabwärts (4) oder dem stromaufwärts (1) befindlichen äußeren Behälter unter einem vorbestimmten Niveau liegt, und dass die Verbindung geschlossen (9) wird, wenn das besagte Flüssigkeitsniveau oberhalb des besagten, vorbestimmten Niveaus liegt.

2. Vorrichtung gemäß Anspruch 1, **dadurch gekennzeichnet, dass** das besagte vorbestimmte Niveau in dem stromaufwärts befindlichen äußeren Behälter auf einer gleichen oder höheren Ebene als der Schwelle liegt.

3. Vorrichtung gemäß Anspruch 2, **dadurch gekennzeichnet, dass** die Berührungsfläche der Flüssigkeit, die sich in dem stromaufwärts befindlichen inneren Behälter befindet, und die des in der Druckkammer befindlichen Gases größer als die Berührungsfläche der Flüssigkeit, die sich in dem stromabwärts befindlichen Behälter befindet, und der des in der Druckkammer befindlichen Gases ist.

4. Vorrichtung gemäß Anspruch 1, **dadurch gekennzeichnet, dass** das besagte vorbestimmte Niveau in dem stromabwärts befindlichen Behälter auf einer niedrigeren Ebene als der Schwelle liegt.

5. Vorrichtung gemäß Anspruch 4, **dadurch gekennzeichnet, dass** die Berührungsfläche der Flüssigkeit, die sich in dem stromabwärts befindlichen inneren Behälter (3) befindet, und die des in der Druckkammer (5) befindlichen Gases größer als die Berührungsfläche der Flüssigkeit, die sich in dem stromaufwärts befindlichen inneren Behälter (2) befindet, und die des in der Druckkammer (5) befindlichen Gases ist.

6. Vorrichtung gemäß Anspruch 1, 2 oder 3, **dadurch gekennzeichnet, dass** das Gas in die Druckkammer (5) wegen des Flüssigkeitsflusses, der in die Vorrichtung eintritt, transportiert wird, und dass Mittel vorhanden sind, die das Abführen von Gas aus der Druckkammer (5) über mindestens eine Verbindung ermöglichen.

7. Vorrichtung gemäß Anspruch 6, **dadurch gekennzeichnet, dass** die Mittel ein Rohr (23) umfassen, das in der Druckkammer (5) endet und das mit der Atmosphäre in Kommunikation steht.

8. Vorrichtung gemäß Anspruch 7, **dadurch gekennzeichnet, dass** das Rohr (23) auf einer vorbestimmten Höhe oberhalb der Flussschwelle (6) der Druckkammer (5) endet.

9. Vorrichtung gemäß Anspruch 7 oder 8, **dadurch gekennzeichnet, dass** das Rohr (23) in einer Wand des inneren, stromaufwärts befindlichen Behälters (2) endet.

10. Vorrichtung gemäß Anspruch 7, 8 oder 9, **dadurch gekennzeichnet, dass** das Rohr (23) auf einer vorbestimmten Höhe in dem äußeren, stromaufwärts befindlichen Behälter (1) endet und durch Schwimmermittel (38) abhängig von dem in jenem Behälter (1) befindlichen Niveau oder der darin befindlichen Flüssigkeit geschlossen oder geöffnet werden kann.

11. Vorrichtung gemäß Anspruch 6, **dadurch gekennzeichnet, dass** die Mittel durch Mittel einer Wand gebildet werden, die den inneren, stromaufwärts befindlichen Behälter (2) von dem äußeren, stromaufwärts befindlichen Behälter (1) trennt und die auf einer vorbestimmten Höhe oberhalb der Flussschwelle (6) der Druckkammer endet.

12. Vorrichtung gemäß Anspruch 1 oder 2, **dadurch gekennzeichnet, dass** das Gas über einem Kompressor in die Druckkammer (5) transportiert wird und dass Mittel vorhanden sind, die das Abführen von Gas aus der Druckkammer über mindestens eine Verbindung ermöglichen.

13. Vorrichtung gemäß Anspruch 12, **dadurch gekennzeichnet, dass** die Mittel ein Rohr umfassen, das in der Druckkammer endet und das mit der Atmosphäre in Kommunikation steht.

14. Vorrichtung gemäß Anspruch 13, **dadurch gekennzeichnet, dass** das Rohr auf einer vorbestimmten Höhe oberhalb der Flussschwelle der Druckkammer endet.

15. Vorrichtung gemäß Anspruch 13 oder 14, **dadurch gekennzeichnet, dass** das Rohr in einer Wand des inneren, stromaufwärts befindlichen Behälters endet.

16. Vorrichtung gemäß Anspruch 13, 14 oder 15, **dadurch gekennzeichnet, dass** das Rohr auf einer vorbestimmten Höhe in dem äußeren, stromaufwärts befindlichen Behälter endet und abhängig von dem Niveau der in dem Behälter befindlichen Flüssigkeit durch Schwimmermittel geschlossen oder geöffnet werden kann.

17. Vorrichtung gemäß Anspruch 12, **dadurch gekennzeichnet, dass** die Mittel durch Mittel einer Wand gebildet werden, die den inneren, stromaufwärts befindlichen Behälter von dem äußeren, stromaufwärts befindlichen Behälter trennt und die auf einer vorbestimmten Höhe oberhalb der Flussschwelle der Druckkammer endet.

## Revendications

1. Dispositif de régulation d'un écoulement de liquide traversant ce dispositif, ce dernier formant un système de récipients communiquants qui comprend une chambre de pression (5) avec seuil d'écoulement (6), un récipient extérieur (1) et un récipient intérieur (2) placés en amont de la chambre de pression, et un récipient intérieur (3) et un récipient extérieur (4) placés en aval de la chambre de pression, de sorte que pendant le fonctionnement l'écoulement de liquide peut être contrôlé au moyen de la pression d'un gaz présent dans la chambre de pression (5), **caractérisé en ce que** la chambre de pression présente une liaison (8) avec l'atmosphère, cette liaison étant ouverte lorsque le niveau de liquide dans le récipient extérieur aval (4) ou amont (1) se trouve au-dessous d'un niveau prédéterminé, et cette liaison étant fermée (9) lorsque le dit niveau de liquide dépasse le dit niveau prédéterminé.

2. Dispositif selon la revendication 1, **caractérisé en ce que** le dit niveau prédéterminé dans le récipient extérieur amont se trouve à un niveau égal ou supérieur au seuil.

3. Dispositif selon la revendication 2, **caractérisé en ce que** la surface de contact du liquide contenu dans le récipient intérieur amont et le gaz présent dans la chambre de pression est plus grande que la surface de contact du liquide contenu dans le récipient intérieur aval et le gaz présent dans la chambre de pression.

4. Dispositif selon la revendication 1, **caractérisé en ce que** le dit niveau prédéterminé dans le récipient extérieur aval est à un niveau inférieur à celui du seuil.

5. Dispositif selon la revendication 4, **caractérisé en ce que** la surface de contact entre le liquide contenu dans le récipient intérieur aval (3) et le gaz présent dans la chambre de pression (5) est plus grande que la surface de contact entre le liquide contenu dans le récipient intérieur amont (2) et le gaz présent dans la chambre de pression (5).

6. Dispositif selon la revendication 1, 2 ou 3, **caractérisé en ce que** du gaz est transporté dans la chambre de pression (5) en raison de l'écoulement de liquide entrant dans le dispositif, et **en ce que** des moyens sont présents qui permettent la décharge de gaz depuis la chambre de pression (5) en passant par au moins une liaison.

7. Dispositif selon la revendication 6, **caractérisé en ce que** les moyens comprennent un tube (23), qui se termine dans la chambre de pression (5) et qui est en communication avec l'atmosphère.

8. Dispositif selon la revendication 7, **caractérisé en ce que** le tube (23) se termine à une hauteur prédéterminée au-dessus du seuil d'écoulement (6) de la chambre de pression (5).

9. Dispositif selon la revendication 7 ou 8, **caractérisé en ce que** le tube (23) se termine dans une paroi du récipient intérieur amont (2).

10. Dispositif selon la revendication 7, 8 ou 9, **caractérisé en ce que** le tube (23) se termine à une hauteur prédéterminée dans le récipient extérieur amont (1) et peut être fermé ou ouvert au moyen d'un flotteur (38) selon le niveau de liquide dans ce récipient (1).

11. Dispositif selon la revendication 6, **caractérisé en ce que** les moyens sont formés par une paroi qui sépare le récipient intérieur amont (2) du récipient extérieur amont (1), la dite paroi se terminant à une hauteur prédéterminée au-dessus du seuil d'écoulement (6) de la chambre de pression.

12. Dispositif selon la revendication 1 ou 2, **caractérisé en ce que** le gaz est transporté dans la chambre de pression (5) par l'intermédiaire d'un compresseur, et **en ce que** des moyens sont présents pour permettre la décharge de gaz depuis la chambre de pression par l'intermédiaire d'au moins une liaison.

13. Dispositif selon la revendication 12, **caractérisé en ce que** les moyens comprennent un tube qui se termine dans la chambre de pression et qui communique avec l'atmosphère.

14. Dispositif selon la revendication 13, **caractérisé en ce que** le tube se termine à une hauteur prédéterminée au-dessus du seuil d'écoulement de la chambre de pression.

15. Dispositif selon la revendication 13 ou 14, **caractérisé en ce que** le tube se termine dans une paroi du récipient intérieur amont.

16. Dispositif selon la revendication 13, 14 ou 15, **caractérisé en ce que** le tube se termine à une hauteur prédéterminée dans le récipient extérieur amont, et peut être fermé ou ouvert au moyen d'un flotteur selon le niveau de liquide dans ce récipient.

17. Dispositif selon la revendication 12, **caractérisé en ce que** les moyens sont formés par une paroi qui sépare le récipient intérieur amont du récipient extérieur amont, cette paroi se terminant à une hauteur prédéterminée au-dessus du seuil d'écoulement de la chambre de pression.
